Europäisches Patentamt

European Patent Office

Office européen des brevets

(19)

(11) Numéro de publication: **0 150 535**
**B1**

(12) **FASCICULE DE BREVET EUROPEEN**

(45) Date de publication du fascicule du brevet: **25.04.90**

(51) Int. Cl.⁵: **G 06 F 9/40, G 06 F 9/42**

(21) Numéro de dépôt: **84201883.0**

(22) Date de dépôt: **17.12.84**

(54) **Processeur pour traiter des données en fonction d'instructions provenant d'une mémoire-programme.**

(30) Priorité: **30.12.83 FR 8321104**

(43) Date de publication de la demande:
**07.08.85 Bulletin 85/32**

(45) Mention de la délivrance du brevet:
**25.04.90 Bulletin 90/17**

(84) Etats contractants désignés:
**DE FR GB IT SE**

(56) Documents cités:
**COMPUTER DESIGN, vol. 14, no. 10, octobre 1975, pages 98-101, Concord, Mass., US; D. MANDELBAUM: "Index-register logic saves one instruction per loop"**
**IBM TECHNICAL DISCLOSURE BULLETIN, vol. 14, no. 9, février 1972, page 2806, New York, US; R. BERGEMAN et al.: "Loop instruction"**

(73) Titulaire: **TELECOMMUNICATIONS RADIOELECTRIQUES ET TELEPHONIQUES T.R.T.**
**88, rue Brillat Savarin**
**F-75013 Paris (FR)**

(72) Inventeur: **Mary, Luc**
**SOCIETE CIVILE S.P.I.D. 209 rue de l'Université**
**F-75007 Paris (FR)**
Inventeur: **Barazesh, Bahman**
**SOCIETE CIVILE S.P.I.D. 209 rue de l'Université**
**F-75007 Paris (FR)**

(74) Mandataire: **Chaffraix, Jean et al**
**Société Civile S.P.I.D. 209, rue de l'Université**
**F-75007 Paris (FR)**

EP 0 150 535 B1

Courier Press, Leamington Spa, England.

# EP 0 150 535 B1

**Description**

L'invention concerne un processeur pour traiter des données comprenant:

une mémoire-programme pour stocker une pluralité d'instructions parmi lesquelles se trouve une instruction de commande de boucle de programme délimitée par une adresse initiale et une adresse finale, instruction de commande présentant un champ de répétition pour définir le nombre de répétitions désiré pour la boucle,

un compteur-programme muni d'une première commande par pas pour fournir des adresses à ladite mémoire de programme,

des moyens de comptage de boucle pour compter le nombre de répétitions de la boucle après chaque passage de l'adresse initiale,

un premier registre pour contenir ladite adresse initiale,

des premiers moyens de détection pour détecter l'apparition de l'adresse finale afin de charger le compteur-programme avec le contenu dudit premier registre,

des deuxièmes moyens de détection couplés auxdits moyens de comptage opérant en fonction du champ de répétition pour inhiber lesdits premiers moyens de détection à l'apparition du nombre désiré de répétitions afin de permettre au compteur-programme de quitter ladite boucle de programme.

D'une manière usuelle les processeurs permettent l'exécution de boucles de programme commandée à partir d'une instruction de boucle. On pourra consulter à ce sujet un premier document : "IBM TECHNICAL DISCLOSURE BULLETIN", volume 14, N°0, février 1972, page 2806 intitulé "Loop Instruction".

Dans un second document: "COMPUTER DESIGN", volume 14, N°10, octobre 1975, pages 98—101 intitulé "Index-Register Logic Saves One Instruction per Loop", on a cherché à augmenter la rapidité d'exécution des boucles de programme en utilisant un registre d'index qui est rendu de ce fait indisponible pour d'autre tâches.

Aucun des processeurs évoqués par ces documents n'est confronté au problème du traitement en pipe-line des instructions.

En effet, les calculs en pipe-line sont extrémement contraignants en ce qui concerne l'enchaînement de, notamment, la présentation et la lecture des arguments des produits partiels. Une rupture de séquence dans le programme entre les initialisations et le début de l'exécution de la boucle ne peut pas être tolérée. De même à la sortie de la boucle il faut prévoir des instructions différentes de celles faisant partie de la boucle afin que l'on puisse récupérer les produits partiels. Il est donc impossible d'initialiser certains registres d'argument, de commencer des calculs intermédiaires, de déclarer une instruction de commande de boucle et d'exécuter N fois une séquence bouclée.

L'invention vise à fournir un processeur permettant de programmer une instruction de boucle tout en autorisant la possibilité d'exécuter des calculs en pipe-line dans la séquence bouclée de programme sans utiliser de registres auxiliaires d'usages généraux tels que les registres d'index.

Un processeur conforme à l'invention est remarquable en ce que l'instruction de commande présente, en outre, un champ de délai pour définir un intervalle d'adressage compris entre l'instruction de commande et ladite adresse initiale et en ce que pour traiter ce champ de délai le processeur comprend:

un compteur de délai chargé en fonction du champ de délai, muni d'une seconde commande pour opérer en synchronisme avec ledit compteur-programme pendant l'intervalle de délai,

des troisièmes moyens de détection couplés audit compteur de délai pour détecter la fin de l'intervalle de délai et pour charger ledit premier registre.

Ainsi, en ajustant le délai entre l'instruction de commande et le début de la séquence bouclée, il est possible de préparer ou d'initialiser les registres appropriés pour le calcul en pipe-line.

Le calcul commençant immédiatement après l'initialisation, on surmonte le problème de contrainte d'enchaînement.

Un avantage apporté par l'invention est que l'exécution de la séquence bouclée n'est pas conditionnée par les adresses absolues des instructions.

La description suivante faite en regard des dessins annexés, le tout donné à titre d'exemple non limitatif, fera bien comprendre comment l'invention peut être réalisée.

La figure 1 représente un processeur conforme à l'invention.

La figure 2 représente schématiquement un ordinogramme comportant une boucle.

La figure 3 représente le format d'une instruction de commande de bouclage.

La figure 4 représente un diagramme-temps pour l'explication du processeur conforme à l'invention.

La figure 5 représente un ordinogramme correspondant au diagramme-temps de la figure 4.

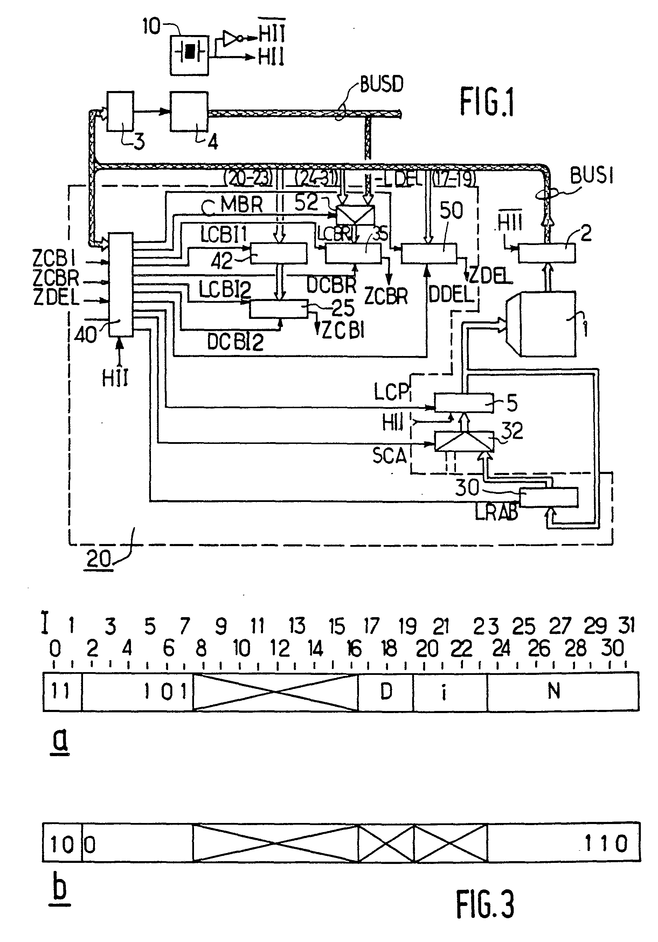

Le processeur montré à la figure 1 comporte tout d'abord une mémoire morte 1 contenant tout le programme de fonctionnement du processeur. Ce fonctionnement est défini au moyen d'instructions provenant de cette mémoire 1 et qui, avant d'être transmises sur une ligne BUSI, transitent dans un registre 2 dit registre d'instructions. Ces instructions vont commander par l'intermédiaire d'un circuit de commande 3 différentes opérations d'un ensemble de 4 éléments du processeur. Ces éléments sont, comme cela est bien connu, des mémoires vives, des unités arithmétiques et logiques, des registres de travail, des multiplicateurs câblés, etc ... Les différentes instructions sont rangées à différentes adresses de la mémoire 1. Les codes d'adresses pour cette mémoire 1 sont engendrés par un compteur-programme 5. Un circuit d'horloge 10 élabore des signaux HII qui font progresser le compteur 5 et de là règlent la

2

cadence d'apparition des instructions sur le bus BUSI, le registre 2 étant chargée sur les signaux $\overline{\text{HII}}$. Le circuit 10 fournit aussi d'autres signaux pour régir tout le fonctionnement du processeur.

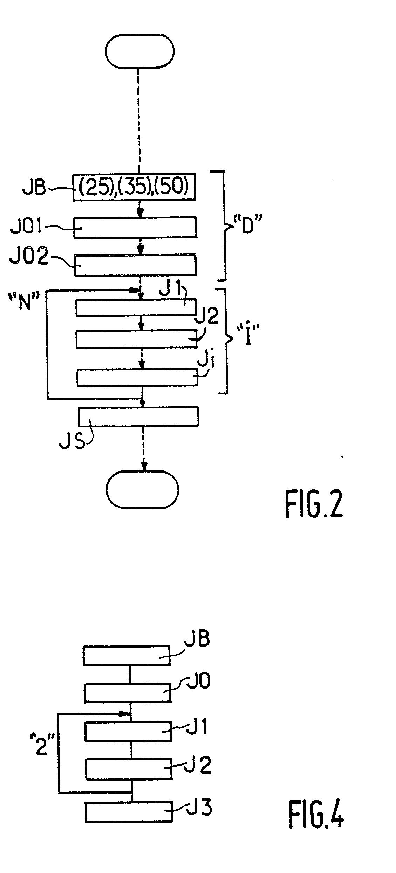

On a représenté sous forme d'ordinogramme à la figure 2, un extrait du programme contenu dans la mémoire 1. Sur cet ordinogramme, chaque rectangle représente une instruction. Cet extrait montre une séquence d'instructions J1, J2, ... Ji qu'il faut exécuter N fois. Pour cette exécution, le processeur comporte un circuit de boucle 20 comprenant un compteur d'instructions de séquences 25 pour fournir un signal ZCBI indiquant la fin de la séquence d'instructions J1, J2, ... Ji; ce compteur 25 s'incrémente sur des signaux DCBI2 ayant la même cadence que les signaux de progression HII fournis par le circuit d'horloge 10. Le circuit 20 comporte aussi un premier registre 30 pour contenir l'adresse de la première instruction J1, et pour la fournir par l'intermédiaire d'un multiplexeur 32 au compteur-programme 5 à l'apparition du signal de fin de séquence ZCBI et un compteur de boucle 35 déclenché au début de ladite partie de programme, s'incrémentant sur des signaux DCBR afin de compter le nombre d'exécutions et prévu pour fournir un signal ZCBR indiquant la fin de partie de programme afin de passer à la suite du programme-instruction. Le signal ZCBI correspond, dans cet exemple de réalisation, au passage à zéro du compteur 25 s'incrémentant par pas de "− 1" sur les signaux d'horloge DCB12 fournis par un circuit de commande de boucle 40. Pour recharger le compteur 25 à chaque début de séquence, on a prévu un registre 42 destiné à contenir le nombre "i" correspondant au nombre d'instructions que comporte la séquence. D'une manière semblable, le signal ZCBR est le signal de passage à zéro du compteur 35 s'incrémentant par pas de "− 1" à partir de la valeur N sur les signaux DCBR élaborés par le circuit 40.

Le registre 42 et le compteur 35 sont chargés au moyen d'une instruction de bouclage JB dont la structure est montré à la figure 3. Cette instruction est formée de trente deux éléments binaires (eb) correspondant au nombre de fils constituant le bus BUSI.

Les eb 0—1 correspondent à un code donnant la nature de l'instruction; ce code combiné avec les eb 2—7 attribués notamment au registre 42 et au compteur 35 définit alors complètement l'instruction de bouclage. Les éléments binaires 20—23 donnent la valeur de "i" et les eb 24—31 la valeur "N". De ce format d'instruction, il découle que les entrées parallèles du registre 42 sont reliées aux fils 20 à 23 correspondant aux éléments binaires 20—23 et celles du compteur 35 aux fils 24—31.

Le multiplexeur 32 permet de connecter d'autres registres pour contenir l'adresse d'un code-programme; cela n'est point détaillé puisque ne faisant pas partie de l'invention. Un signal SCA appliqué à ce multiplexeur permet d'aiguiller le registre 30 sur le compteur-programme 5.

Afin de faciliter les opérations d'initialisation de boucle et de s'adapter au fonctionnement en pipe-line, on a prévu des mesures pour retarder l'exécution de la boucle après l'instruction de boucle JB. Pour cela le circuit de boucle 20 comporte un compteur de délai 50 destiné à contenir un nombre "D" correspondant au nombre d'instructions à exécuter avant de commencer la boucle (les instructions J01 à J0n à la figure 2). Ce compteur 50 fournit un signal ZDEL correspondant au passage à zéro pour déclencher le début d'exécution de la boucle. Tout comme le registre 42 et le compteur 35, ce compteur de délai 50 est chargé par l'instruction JB; le nombre "D" est défini au moyen des éléments binaires 17 à 19. Les fils correspondant à ces éléments binaires sont connectés aux entrées parallèles du compteur 50. Ce compteur s'incrémente par pas de "− 1" sur des signaux d'horloge DDEL fournis par le circuit de commande de boucle 40.

Une particularité intéressante de l'invention est que l'on a prévu un multiplexeur 52 commandé par un signal CMBR qui permet de charger le registre 35 soit à partir du bus BUSI, soit à partir du bus de données BUSD sortant de l'ensemble 4 d'éléments du processeur. Cette particularité procure l'avantage que le nombre "N" d'exécutions peut résulter d'un calcul effectué à l'intérieur de l'ensemble 4. L'instruction de bouclage JB peut alors avoir deux formes, voir figure 3 : celle en *a* où les éléments binaires n° 0, 1, 5, 6 et 7 ont pour valeur 1, 1, 1,0,1; le registre 42 et les compteurs 35 et 50 sont chargés à partir du bus BUSI et celle en *b* où les éléments binaires n° 0, 1, 2, 28, 29, 30 et 31 ont pour valeur 1, 0, 0, 0, 1, 1, 0; seul le compteur 35 est chargé à partir du bus BUSD. Ces valeurs sont évidemment données à titre d'exemple pour fixer les idées.

Le circuit de commande de boucle 40 est constitué à partir d'un décodeur qui peut être réalisé sous forme de réseaux PLA, PROM ... Ce circuit de commande effectue, à partir des signaux d'entrée ZCBI, ZCBR, ZDEL et HII et aussi à partir des codes véhiculés par le bus BUSI, les opérations suivantes où LCBI1, LCBR, LDEL, LCBI2 et LRAB sont les commandes de chargement des registres et compteurs 42, 25, 50, 25 et 30 respectivement et SCA la commande du multiplexeur 32:

$$\text{LCBI1} = \text{IO.I1.I5.}\overline{\text{I6}}\text{.I7.HII}$$

$$\text{LCBR} = \text{IO.I1..I5.}\overline{\text{I6}}\text{..I7....HII} + \text{IO.}\overline{\text{I1}}\text{.}\overline{\text{I2}}\text{.}\overline{\text{I28}}\text{.I29.I30.}\overline{\text{I31}}\text{..HII}$$

$$\text{LDEL} = \text{IO.I1.I5.}\overline{\text{I6}}\text{.I7.HII}$$

$$\text{MBR} = \text{IO.}\overline{\text{I1}}\text{.}\overline{\text{I2}}\text{.}\overline{\text{I28}}\text{.I29.I30.}\overline{\text{I31}}$$

$$\text{LCBI2} = \text{LCBI1} + \text{ZCBI.HII} \qquad\qquad \text{DCBI2} = \text{ZDEL.HII}$$

$$\text{DCBR} = \text{ZDEL.ZCBI.}\overline{\text{HII}} \qquad\qquad \text{DDEL} = \overline{\text{ZDEL}}\text{...HII}$$

$$\text{LRAB} = \text{ZDEL} \qquad\qquad\qquad\qquad \text{SCA} = \text{ZDEL}$$

$$\text{LCP} = \text{ZCBI}$$

EP 0 150 535 B1

I0, I1 indiquent la valeur des éléments binaires eb 0 et eb 1 de même que I5, I6, I7 la valeur des éléments et 5, 6 et 7 du bus BUSI.

Avant d'expliquer le fonctionnement du circuit de boucle 20, il convient de noter que le contenu des compteurs évolue sur les fronts montants des signaux d'incrémentation et que le chargement en parallèle de ces compteurs et du registre 42 est effectué sur le niveau "1" du signal de chargement du compteur. Afin de faciliter cette explication on a pris le cas particulier où D = 1, i = 2 et N = 2, ce qui correspond à l'ordinogramme de la figure 4.

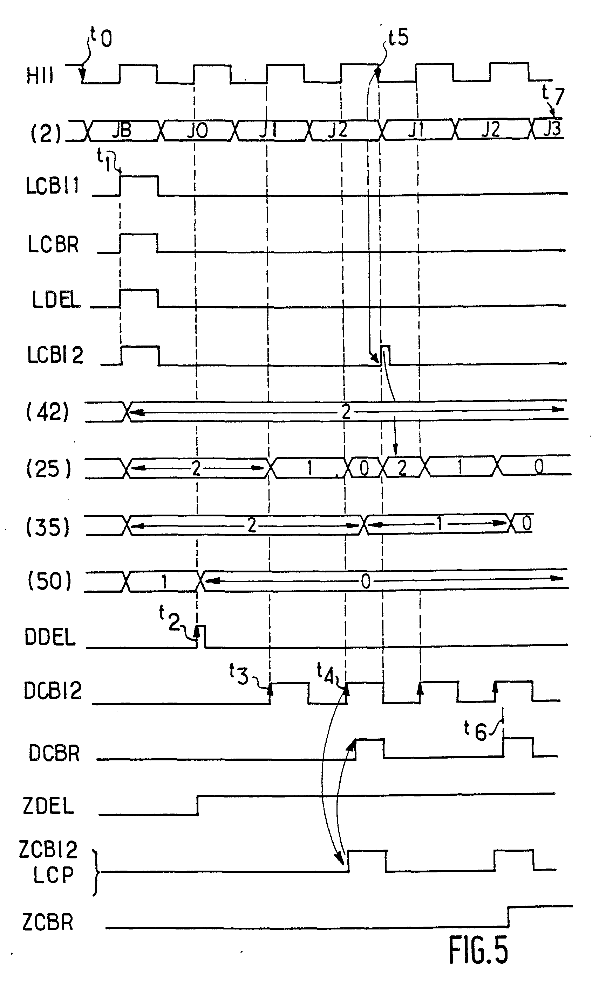

On se reporte, maintenant, à la figure 5. A l'instant t0, survient une transition descendante du signal HII (ce qui correspond à une transition montante du signal HII); cette transition provoque le chargement dans le registre d'instructions 2 de l'instruction JB. Le fait que les éléments binaires eb0, 1, 5, 6, 7 soient décodés implique que la relation suivante est réalisée: I0.I1.I5.$\overline{I6}$.I7 = 1.

Les signaux LCBI1, LCBR et LDEL deviennent alors actifs à l'instant t1; le compteur 50, le registre 42 et le compteur 35 sont ensuite chargés respectivement desdites valeurs particulières 1, 2 et 2. Le fait que le signal LCBI1 soit actif implique que le signal LCBI2 le soit aussi, ce qui provoque donc le chargement du compteur 25. Le contenu du compteur 50 étant différent de zéro, le signal ZDEL est donc inactif ce qui autorise l'application du signal DDEL à l'instant t2 correspondant au front montant du signal HII suivant l'instant t1. Comme le contenu du compteur 50 était "1" avant l'instant t2, ce contenu passe alors, à cet instant t1, à "0"; le signal ZDEL devient actif, ce qui a deux conséquences:

le contenu du compteur-programme est emmagasiné dans le registre 30;

les signaux de progression DCBI2 pourront être appliqués au prochain front montant du signal HII.

Le contenu du compteur 25 prend la valeur "0" peu après l'instant t4 correspondant à un front montant du signal HII, le signal ZCBI2 devient actif ce qui entraîne le passage à l'état actif du signal DCBR et le chargement du compteur-programme du code d'adresse d'instruction contenu dans le registre 30. Survient ensuite, à l'instant t5, le front descendant du signal HII, ce qui entraîne le passage à l'état actif du signal LCBI2; de ce fait le contenu du compteur 25 prend à nouveau la valeur "2" ce qui fait passer à l'état inactif le signal LCBI2.

Les choses se déroulent de la manière indiquée jusqu'au moment où le contenu du compteur 35 prend la valeur "0", déclenché par le front montant du signal DCBR surgissant à l'instant t6, le signal ZCBR devenant alors actif. Les signaux LCBI2, LP sont alors verrouillés à l'état inactif de sorte que le circuit de bouclage n'est plus opérant. A l'instant t7 c'est l'instruction J3 qui sera contenue dans le registre 2.

## Revendications

1. Processeur pour traiter des données comprenant:

une mémoire-programme (1) pour stocker une pluralité d'instructions parmi lesquelles se trouve une instruction de commande de boucle de programme délimitée par une adresse initiale et une adresse finale, instruction de commande présentant un champ de répétition pour définir le nombre de répétitions désiré pour la boucle,

un compteur-programme (5) muni d'une première commande par pas pour fournir des adresses à ladite mémoire de programme,

des moyens de comptage de boucle (35) pour compter le nombre de répétitions de la boucle après chaque passage de l'adresse initiale,

un premier registre (30) pour contenir ladite adresse initiale,

des premiers moyens de détection pour détecter l'apparition de l'adresse finale afin de charger le compteur-programme avec le contenu dudit premier registre,

des deuxièmes moyens de détection couplés auxdits moyens de comptage opérant en fonction du champ de répétition pour inhiber lesdits premiers moyens de détection à l'apparition du nombre désiré de répétitions afin de permettre au compteur-programme de quitter ladite boucle de programme,

caractérisé en ce que l'instruction de commande présente, en outre, un champ de délai pour définir un intervalle d'adressage compris entre l'instruction de commande et ladite adresse initiale et en ce que pour traiter ce champ de délai le processeur comprend:

un compteur de délai (50) chargé en fonction du champ de délai, muni d'une seconde commande pour opérer en synchronisme avec ledit compteur-programme pendant l'intervalle de délai,

des troisièmes moyens de détection couplés audit compteur de délai pour détecter la fin de l'intervalle de délai et pour charger ledit premier registre.

2. Processeur pour traiter des données selon la revendication 1 dans lequel lesdits deuxièmes moyens de détection sont formés à partir d'un compteur de répétition distinct du compteur de délai.

3. Processeur pour traiter des données selon la revendication 2 comprenant en outre un compteur de longueur de boucle chargé d'une part en fonction d'un champ de longueur de boucle (25) faisant partie de ladite instruction de commande pour une boucle, muni d'une troisième commande pour opérer en synchronisme avec le compteur-programme pendant l'exécution de la boucle et couplé d'autre part auxdits premiers moyens de détection, ce compteur de longueur de boucle étant muni de moyens d'initialisation (42) pour être remis à l'état existant à l'apparition de l'état initial.

4. Processeur pour traiter des données selon la revendication 3 dans lequel ledit compteur de longueur de boucle est distinct du compteur de délai.

4

# EP 0 150 535 B1

**Patentansprüche**

1. Anordnung zur Datenverarbeitung mit:

einem Programmspeicher (1) zum Speichern einer Anzahl von Befehlen, unter denen sich ein Steuerbefehl für eine mit einer Adresse eingeleitete und mit einer Adresse abgeschlossene Programmschleife befindet, der ein Wiederholungsfeld zum Bestimmen der für die Scheife erforderlichen Wiederholungsanzahl darstellt,

einem Programmzähler (5) mit einer ersten Schrittsteuerung zum Zuleiten von Adressen zum Programmspeicher,

Schleifenzählmitteln (35) zum Zählen der Wiederholungsanzahl der Schleife nach jedem Durchgang der Anfangsadresse,

einem ersten Register (30) zum Aufnehmen der Anfangsadresse,

ersten Detektormitteln zum Detektieren des Erscheinens der Endadresse zum Laden des Programmzählers mit dem Inhalt des ersten Registers,

zweiten Detektormitteln, die mit den Zählmitteln gekoppelt sind, die abhängig vom Wiederholungsfeld zum Abblocken der ersten Detektormittel beim Erscheinen der erforderlichen Wiederholungsanzahl arbeiten, um dem Programmzähler die Möglichkeit zum Verlassen der Programmschleife zu geben,

dadurch gekennzeichnet, daß außerdem der Steuerbefehl ein Verzögerungsfeld zum Bestimmen eines Adressierintervalls zwischen dem Steuerbefehl und der Anfangsadresse darstellt, und daß zum Bearbeiten dieses Verzögerungsfeldes diese Anordnung folgende Elemente enthält:

einen durch das Verzögerungsfeld geladenen Verzögerungszähler (50) mit einer zweiten Steuerung zum synchronen Betrieb mit dem Programmzähler während des Verzögerungsintervalls,

dritte Detektormittel, die zum Detektieren des Endes des Verzögerungsintervalls und zum Laden des ersten Registers mit dem Verzögerungszähler gekoppelt ist.

2. Anordnung zum Verarbeiten von Daten nach Anspruch 1, in der die zweiten Detektormittel aus einem vom Verzögerungszähler separaten Wiederholungszähler gebildet ist.

3. Anordnung zum Verarbeiten von Daten nach Anspruch 2, mit außerdem einem Schleifenlängenzähler, der einerseits abhängig vom Schleifenlängenfeld (25) als Teil des Steuerbefehls für eine Schleife mit einer dritten Steuerung zum synchronen Betrieb mit dem Programmzähler während der Durchführung der Schleife geladen wird und andererseits mit den ersten Detektormitteln gekoppelt ist, wobei dieser Schleifenlängenzähler mit Einleitungsmitteln (42) zum Rückgewinnen des beim Erscheinen des Anfangszustands bestehenden Zustands versehen ist.

4. Anordnung zum Verarbeiten von Daten nach Anspruch 3, wobei der Schleifenlängenzähler vom Verzögerungszahler separat ist.

**Claims**

1. A processor for treating data, comprising:

a programme memory (1) for storing a plurality of instructions, including a programme loop control instruction which is defined by an initial address and a final address and which comprises a repetition field for defining the desired number of loop repeats,

a programme counter (5) with a first step-wise control for applying the addresses to said programme memory,

loop counting means (35) for counting the number of loop repeats after each passage of the initial address,

a first register (30) for storing said initial address,

first detection means for detecting the appearance of the final address in order to load the programme counter with the contents of said first register,

second detection means which are coupled to said counting means and which operate as a function of the repetition field so as to inhibit said first detection means upon the appearance of the desired number of repeats in order to enable the programme counter to abandon said programme loop, characterized in that the control instruction also comprises a delay field for defining an addressing interval between the control instruction and said initial address, and in that for treating said delay field the processor comprises:

a delay counter (50) which is loaded as a function of the delay field with a second control for operation in synchronism with said programme counter during the delay interval,

third detection means which are coupled to said delay counter so as to detect the end of the delay interval and to load said first register.

2. A process for treating data as claimed in Claim 1 in which said second detection means are formed on the basis of a repetition counter which is distinct from the delay counter.

3. A processor for treating data as claimed in Claim 2, also comprising a loop length counter which on the one hand is loaded as a function of a loop length field (25) forming part of said loop control instruction with a third control for operation in synchronism with the programme counter during the execution of the loop, and on the other hand coupled to said first detection means, said loop length counter being provided with initialisation means (42) so as to be reset to the state existing upon the appearance of the initial state.

4. A processor for treating data as claimed in Claim 3 in which said loop length counter is distinct from the delay counter.

FIG.1

a

b

FIG.3

1

FIG.2

FIG.4

FIG.5